Europäisches Patentamt

European Patent Office

Office européen des brevets

(11) Veröffentlichungsnummer: **0 231 911**
A2

(12) **EUROPÄISCHE PATENTANMELDUNG**

(21) Anmeldenummer: 87101349.6

(22) Anmeldetag: 02.02.87

(51) Int. Cl.³: **B 23 B 13/00**

(30) Priorität: 05.02.86 DE 3603561

(43) Veröffentlichungstag der Anmeldung:
12.08.87 Patentblatt 87/33

(84) Benannte Vertragsstaaten:
AT BE CH DE ES FR GB IT LI NL SE

(71) Anmelder: Traub AG
Ulmer Strasse 49-55
D-7313 Reichenbach/Fils(DE)

(72) Erfinder: Hasslauer, Heinz
Brunnenwiesenstrasse 1
D-7336 Uhingen 1(DE)

(72) Erfinder: Frey, Werner
Helle Wiesenstrasse 26
D-7333 Ebersbach(DE)

(72) Erfinder: Sonnek, Werner
Brunnenwiesenweg 33
D-7061 Lichtenwald(DE)

(72) Erfinder: Klauss, Walter
Frühlingstrasse 39
D-7321 Adelberg(DE)

(74) Vertreter: Wuesthoff, Franz, Dr.-Ing. et al,
Patentanwälte Wuesthoff -v. Pechmann-Behrens-Goetz
Schweigerstrasse 2
D-8000 München 90(DE)

(54) Verfahren zum automatischen Verstellen einer Stangenführung an einer numerisch gesteuerten Drehmaschine sowie Drehmaschine zum Durchführen des Verfahrens.

(57) In der Arbeitsspindel (10) einer CNC-gesteuerten Drehmaschine sind Führungskörper (58) zum Führen einer
Werkstoffstange (82) an je einem Stützkörper (36) abgestützt
und in bezug auf diese mittels eines Innenrohrs (50) verstellbar, das in der Arbeitsspindel (10) geführt und mit ihr zu gemeinsamer Drehung verbunden ist. Zum radialen Einstellen
der Führungskörper (58) durch axiales Einstellen des Innenrohrs (50) ist ein Stellglied (60) in der Art einer Überwurfmutter drehbar und zu gemeinsamer Axialverschiebung mit
dem Innenrohr (50) verbunden und mit einem an der Arbeitsspindel (10) befestigten Gewindeteil (40) durch eine Gewindepaarung (46, 62) verbunden. Das Stellglied (60) läßt sich mit
einer Haltevorrichtung (70) gegen Drehen festhalten, ohne
dadurch an einer axialen Verstellung gehindert zu sein. Durch
eine C-achsengesteuerte Drehung der Arbeitsspindel (10) bei
gegen Drehen festgehaltenem Stellglied (60) läßt sich die
Stellung des Innenrohrs (50) und somit der Achsabstand der
Führungskörper (58) verändern.

./...

FIG.1

## Verfahren zum automatischen Verstellen einer Stangenführung an einer numerisch gesteuerten Drehmaschine sowie Drehmaschine zum Durchführen des Verfahrens

Die Erfindung betrifft ein Verfahren zum automatischen Verstellen einer Stangenführung an einer numerisch gesteuerten Drehmaschine mit

- einer hohlen Arbeitsspindel,
- Führungskörpern zum Führen einer Werkstoffstange im Inneren der Arbeitsspindel,
- Stützkörpern, an denen sich die Führungskörper abstützen,
- einem Innenrohr, das sich in die Arbeitsspindel erstreckt, mit dieser zu gemeinsamer Drehung verbunden, jedoch axial verstellbar ist, um eine axiale Relativbewegung von Führungskörpern und Stützkörpern in Bezug zueinander zu bewirken und dadurch die Stellung der Führungskörper in radialer Richtung an eine Querschnittsabmessung der Werkstoffstange anzupassen, und
- einem Stellglied, das im normalen Betrieb der Drehmaschine ebenfalls gemeinsam mit der Arbeitsspindel drehbar ist und zum axialen Verstellen des Innenrohrs eine Relativbewegung gegenüber der Arbeitsspindel auszuführen vermag.

Eine Drehmaschine mit den im vorstehenden beschriebenen Merkmalen ist aus der DE-A 2 541 644 bekannt. Dort ist das Stellglied als Büchse mit einem Flansch ausgebildet und zur axialen Verstellung mit dem Kolben einer hydraulischen Kolben-Zylinder-Einheit verbunden, deren Zylinder gleichachsig mit der Arbeitsspindel ortsfest angeordnet ist. Die axiale Verstel-

0231911

EP-60 981

lung des Stellgliedes wird durch eine drehbare Scheibe begrenzt, die parallel zur Arbeitsspindel gelagert und von einem gesonderten Motor in verschiedene Drehwinkelstellungen drehbar ist. Der Motor ist über ein Potentiometer von einer Tastvorrichtung gesteuert, die an einer Stangenzuführeinrichtung angeordnet ist und jeweils den Durchmesser derjenigen Werkstoffstange mißt, die in die Arbeitsspindel eingeführt werden soll. Der Motor dreht die Scheibe in eine vom gemessenen Durchmesser abhängige Drehwinkelstellung. An der Scheibe sind Anschläge verschiedener Länge befestigt; in jeder Drehwinkelstellung der Scheibe begrenzt einer dieser Anschläge die Bewegung des Stellgliedes.

Auf diese Weise ist bei der bekannten Drehmaschine dafür gesorgt, daß verschiedenen Durchmessern der Werkstoffstangen, die in der Arbeitsspindel geführt werden sollen, je eine bestimmte Einstellung des Stellgliedes und somit auch des Innenrohrs und infolgedessen der Führungskörper entspricht. Diese bekannte Anordnung erfordert jedoch einen erheblichen Bauaufwand und hat einen umso größeren Platzbedarf, je größer die Anzahl der Anschläge auf der Scheibe und somit die Anzahl der Durchmesser der Werkstoffstangen ist, an die sich die radialen Abstände der Führungskörper von der geometrischen Achse der Arbeitsspindel anpassen lassen. Es ist deshalb aus praktischen Gründen unumgänglich, die Anpassung der Führungskörper an unterschiedliche Stangendurchmesser auf wenige Stufen zu beschränken und dabei in Kauf zu nehmen, daß die Werkstoffstangen im Durchschnitt mit erheblichem Spiel geführt sind. Infolgedessen lassen sich Schwingungen der Werkstoffstangen in der Arbeitsspindel im allgemeinen nicht so weitgehend vermeiden, wie es mit Blick auf die angestrebte Laufruhe und damit zusammenhängende Arbeitsqualität der Drehmaschine wünschenswert wäre.

Der Erfindung liegt deshalb die Aufgabe zugrunde, auf einfache und raumsparende Weise eine zur Vermeidung störender Schwingungen hinreichend genaue Anpassung der Lage der Führungskörper in der Arbeitsspindel an einer numerisch gesteuerten, stangenverarbeitenden Drehmaschine der eingangs beschriebenen Gattung zu ermöglichen.

Die Aufgabe ist erfindungsgemäß dadurch gelöst, daß eine gesteuerte Drehung der Arbeitsspindel in eine der Drehung proportionale Axialverstellung des Stellgliedes umgesetzt wird, während das Stellglied gegen Drehen festgehalten wird.

Auf diese Weise wird die bei CNC-Drehmaschinen ohnehin vorhandene Winkelsteuerung der Arbeitsspindel für die Verstellung der Führungskörper zum Führen einer Werkstoffstange benutzt, um die Führungskörper an eine Querschnittsabmessung der Werkstoffstange anzupassen. Bei Werkstoffstangen mit rundem Querschnitt ist die maßgebende Querschnittsabmessung der Durchmesser; es ist jedoch auch möglich, die Führungskörper nach dem erfindungsgemäßen Verfahren für Werkstoffstangen von nicht kreisförmigem Querschnitt einzustellen. Beispielsweise ist bei Werkstoffstangen von quadratischem oder sechseckigem Querschnitt die für die Einstellung der Führungskörper maßgebende Querschnittsabmessung die Schlüsselweite des Querschnitts.

Befehle für Drehungen, welche die Arbeitsspindel zum Verstellen des Stellgliedes und somit der Führungskörper erfindungsgemäß bei gegen Drehen festgehaltenem Stellglied ausführt, lassen sich in der bei C-Achsensteuerungen üblichen Weise fest programmieren oder von Messungen der Werkstoffstangen vor deren Eintritt in die Arbeitsspindel abhängig machen.

Unabhängig davon, ob und gegebenenfalls auf welche Weise die maßgebende Querschnittsabmessung der Werkstoffstangen gemessen wird, ist es zweckmäßig, wenn jeweils vor dem Einführen einer Werkstoffstange mit veränderter Querschnittsabmessung die Arbeitsspindel in eine vorbestimmte Winkelstellung gedreht wird, während das Stellglied in einer ebenfalls vorbestimmten Winkelstellung festgehalten wird. Auf diese Weise wird eine bestimmte Bezugsstellung der Führungskörper hergestellt, von der aus eine vorprogrammierte oder von einem Meßergebnis abhängige Einstellung einfach und genau reproduzierbar durchgeführt werden kann.

Vorzugsweise ist die vorbestimmte Winkelstellung der Arbeitsspindel diejenige, bei der die Führungskörper auf den größtmöglichen Werkstoffstangendurchmesser eingestellt sind.

Die Erfindung betrifft ferner eine numerisch gesteuerte, stangenverarbeitende Drehmaschine der eingangs beschriebenen Gattung. Eine solche Drehmaschine ist erfindungsgemäß dadurch weitergebildet, daß
- der Arbeitsspindel in an sich bekannter Weise eine Drehwinkelsteuerung (C-Achsensteuerung) zugeordnet ist,
- das Stellglied als Bestandteil eines Gewindetriebs zwischen Arbeitsspindel und Innenrohr mit einem dieser beiden Bauteile durch eine Gewindepaarung verbunden und mit dem anderen dieser Bauteile relativdrehbar, jedoch zu gemeinsamer Axialverschiebung verbunden ist, und
- dem Stellglied eine gesteuerte Haltevorrichtung zugeordnet ist, mit der sich das Stellglied in mindestens einer definierten Drehwinkelstellung festhalten läßt.

Eine in dieser Weise erfindungsgemäß ausgestaltete Drehmaschine ist wesentlich einfacher aufgebaut als die bekannte gattungsgemäß Drehmaschine und erfordert sogar gegenüber bekannten Drehmaschinen mit C-Achsensteuerung und nur manueller Einstellung der Führungskörper kaum zusätzlichen Bauaufwand, da als Energiequelle für die Verstellung des Stellgliedes und somit der Führungskörper der ohnehin vorhandene Antrieb für die Drehung der Arbeitsspindel verwendet wird. Auch die C-Achsen-Steuerung wird durch ihre zusätzliche Verwendung für das Einstellen der Führungskörper entsprechend wechselnden Querschnittsabmessungen der Werkstoffstangen nicht aufwendiger als sie ohnehin ist. Einen zusätzlichen, aber vergleichsweise unerheblichen Mehraufwand bei der Herstellung einer erfindungsgemäßen Drehmaschine erfordert nur die gesteuerte Haltevorrichtung, mit der sich eine Drehung des Stellgliedes solange verhindern läßt, bis durch eine gesteuerte Drehung der
Arbeitsspindel die gewünschte Einstellung der Führungskörper
erreicht ist.

Bei einer zweckmäßigen Ausführungsform der Erfindung ist das
Stellglied in der Art einer Überwurfmutter am Innenrohr gelagert und mit einem Gewindeteil verschraubt, das mit der Arbeitsspindel fest verbunden ist.

Das Gewindeteil ist zweckmäßigerweise als Verlängerung eines
Zwischenrohrs ausgebildet, welches das Innenrohr mit Schiebesitz umschließt.

Dabei ist es ferner vorteilhaft, wenn das Zwischenrohr und das
Innenrohr innerhalb der Arbeitsspindel Längsschlitze aufweisen, die einander mindestens teilweise überdecken und je einen
Teil eines Führungskörpers sowie eines Stützkörpers enthalten.

Die beschriebene konstruktive Ausgestaltung des Stellgliedes
als Überwurfmutter und/oder die Anordnung von Führungs- und
Stützkörpern innerhalb von Längsschlitzen des Innenrohrs und
eines Zwischenrohrs lassen sich vorteilhaft auch bei gattungsgemäßen Drehmaschinen anwenden, die noch nicht mit einer
C-Achsensteuerung ausgerüstet sind und bei denen es deshalb
erforderlich ist, die zum Verstellen der Führungskörper erforderliche Relativdrehung zwischen Arbeitsspindel und Stellglied
auf andere Weise, insbesondere von Hand, zu bewirken.

Gemäß einem weiteren Merkmal der Erfindung ist die gesteuerte
Haltevorrichtung vorzugsweise derart gestaltet, daß sie das
Stellglied zangenartig umgreift.

Dabei kann das Stellglied mit zwei einander diametral gegenüberliegenden Längsschlitzen versehen sein und die Haltevorrichtung zwei zum Eingreifen in diese Längsschlitze ausgebildete Klauen aufweisen.

Schließlich ist es zweckmäßig, wenn das Stellglied im normalen Betrieb durch mindestens eine Sperrvorrichtung an einer Relativdrehung gegenüber der Arbeitsspindel gehindert ist und diese Sperrvorrichtung durch die Haltevorrichtung entriegelbar ist. Dadurch wird die Möglichkeit geschaffen, den Gewindetrieb zwischen Arbeitsspindel und Innenrohr leichtgängig zu gestalten, ohne daß eine unbeabsichtigte Verstellung zu befürchten wäre.

Ein Ausführungsbeispiel der Erfindung wird im folgenden anhand schematischer Zeichnungen mit weiteren Einzelheiten erläutert. Es zeigt:

Fig. 1  eine Spindelanordnung einer stangenverarbeitenden Drehmaschine in Längsschnitt,
Fig. 2  den Querschnit II-II in Fig. 1,
Fig. 3  den Teilquerschnitt III-III in Fig. 1,

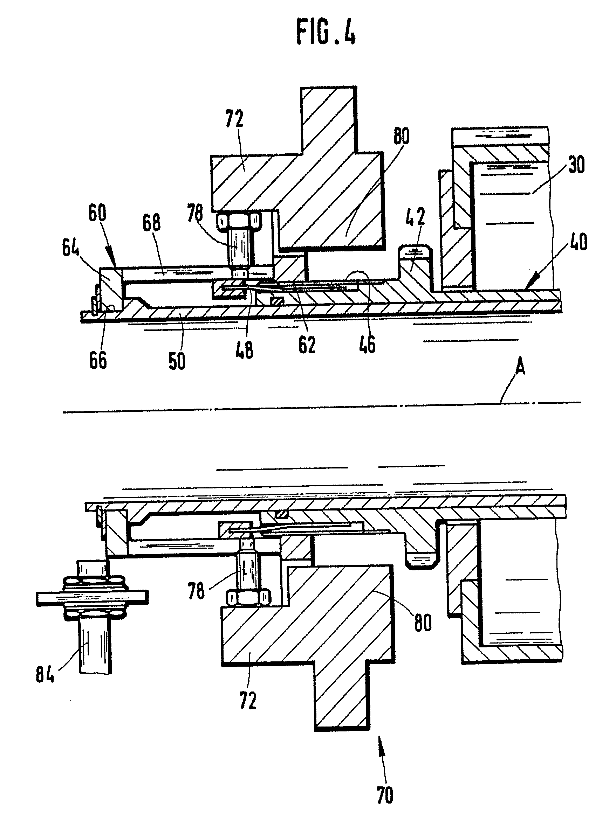

Fig. 4  eine Vergrößerung des Bereichs IV in Fig. 1 und

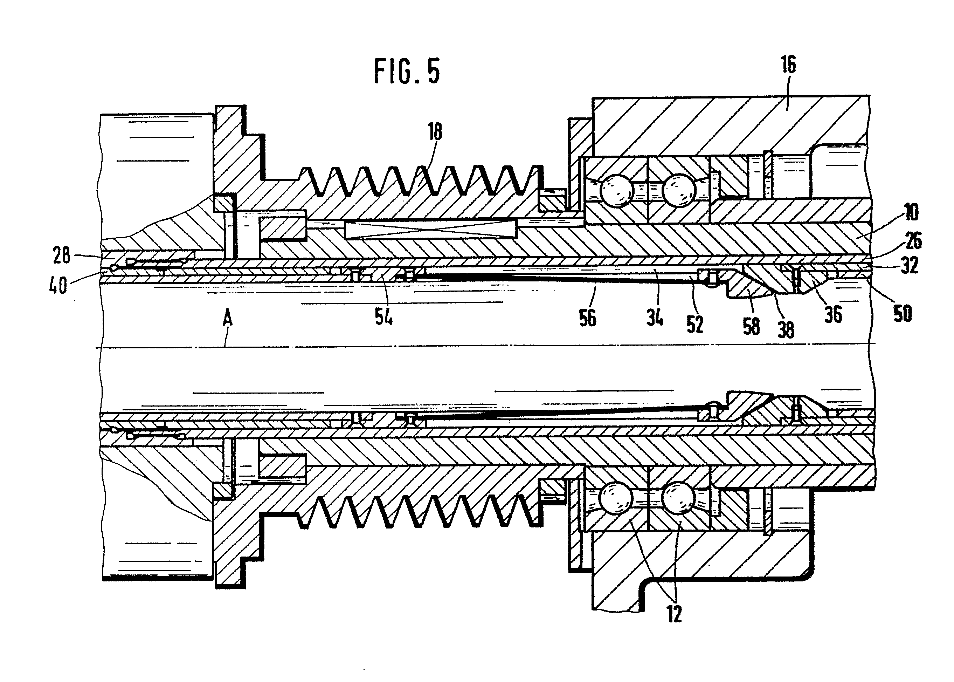

Fig. 5  eine Vergrößerung des Bereichs V in Fig. 1.

Zu der dargestellten Spindelanordnung gehört eine Arbeitsspindel 10, die in einer bei Drehmaschinen üblichen Weise mittels Lagern 12 und 14 in einem Spindelstock um eine Spindelachse A 16 drehbar, jedoch axial unverschiebbar gelagert und über eine an ihr befestigte Riemenscheibe 18 mit einem nicht dargestellten Antriebsmotor verbunden ist. Drehwinkel und Drehgeschwindigkeit des Antriebsmotors und somit auch der Arbeitsspindel 10 sind numerisch gesteuert; eine solche Steuerung wird üblicherweise als C-Achsensteuerung bezeichnet.

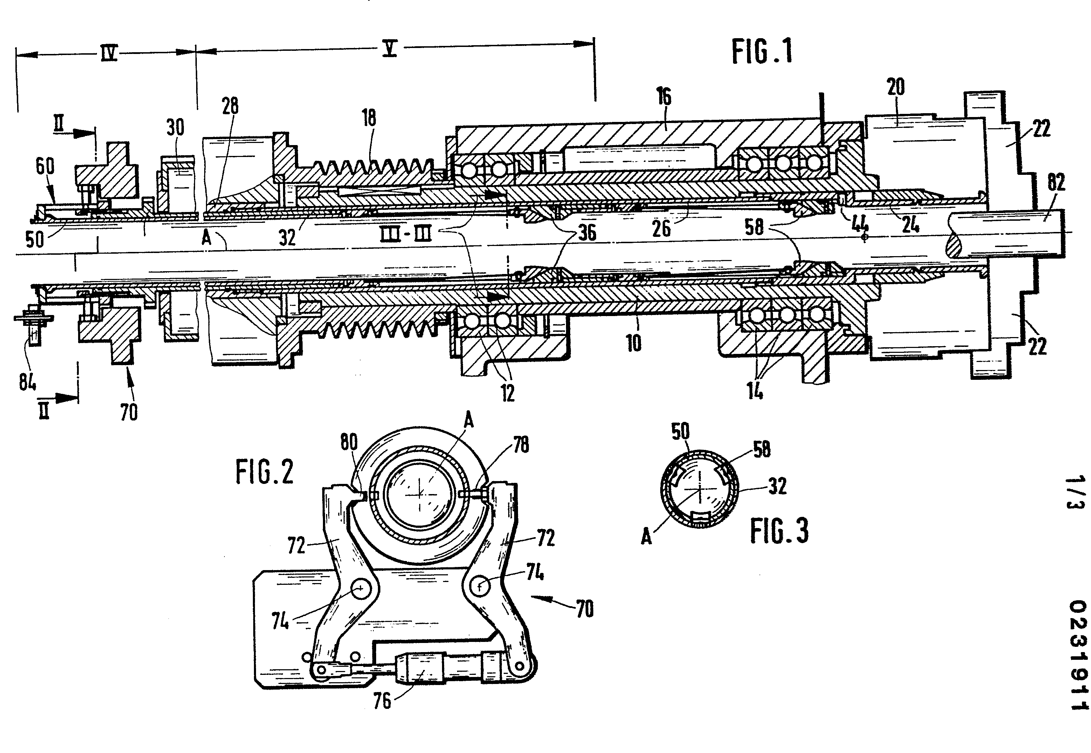

Am vorderen, in Fig. 1 rechten Ende der Arbeitsspindel 10 ist ein Spannfutter 20 von ebenfalls üblicher Bauart befestigt, das drei oder vier um 120° bzw. 90° gegeneinander versetzte Spannbacken 22 aufweist. Diese sind über eine Spannhülse 24 und ein damit verschraubtes, in der Arbeitsspindel 10 axial verschiebbares Spannrohr 26 von einem hohlen Spannkolben 28 betätigbar, der in einem hydraulischen Spannzylinder 30 angeordnet ist. Das Spannrohr 26 ist ebenso wie das Spannfutter 20 und der Spannkolben 28 mit der Arbeitsspindel 10 zu gemeinsamer Drehung verbunden.

Innerhalb des Spannrohrs 26, und ebenfalls gemeinsam mit der Arbeitsspindel 10 drehbar, ist ein Zwischenrohr 32 angeordnet, das mehrere, im dargestellten Beispiel zwei, in axialen Abständen angeordnete Gruppen von in Winkelabständen gegeneinander versetzten Längsschlitzen 34 aufweist. Am vorderen Ende jedes Längsschlitzes 34 ist ein Stützkörper 36 am Zwischenrohr 32 befestigt. Jeder Stützkörper 36 hat an seiner hinteren, in Fig. 1 linken Seite eine Keilfläche 38.

An das linke Ende des Zwischenrohrs 32 schließt sich ein ebenfalls rohrförmiges Gewindeteil 40 an, das fest in den Spannkolben 28 eingeschraubt ist, wodurch dieses Gewindeteil und das Zwischenrohr an einer Relativbewegung gegenüber dem Spannkolben und dem Spannrohr 26 gehindert ist. Für den Ein- und Ausbau des Gewindeteils 40 ist an diesem ein Flansch 42 mit Angriffsflächen für einen Hakenschlüssel ausgebildet. Eine Relativdrehung des Zwischenrohrs 32 gegenüber dem Spannrohr 26 und somit gegenüber der Arbeitsspindel 10 ist sicherheitshalber zusätzlich durch einen am vorderen Ende des Zwischenrohrs 32 angeordneten radialen Bolzen 44 verhindert.

Das Gewindeteil 40 hat in seinem hinteren Endbereich ein Außengewinde 46 mit einer kleinen Steigung von beispielsweise 1,0 mm je Umdrehung. Außerdem trägt das Gewindeteil 40 mehrere in Winkelabständen gegeneinander versetzte Sperrvorrichtungen 48, die von je einer am Gewindeteil festgenieteten Blattfeder und einem an deren freiem Ende befestigten Klotz gebildet sind.

Innerhalb des Zwischenrohrs 32 ist ein Innenrohr 50 angeordnet, das Längsschlitze 52 aufweist, welche je einen der Längs-

schlitze 34 des Zwischenrohrs 32 überdecken und je einen der Stützkörper 36 derart umschließen, daß das Innenrohr 50 mit dem Zwischenrohr 32 zu gemeinsamer Drehung verbunden, gegenüber diesem aber axial verschiebbar ist. Entsprechend wirken auch Paßstücke 54, die am hinteren, in Fig. 1 linken Ende jedes der Längsschlitze 52 des Innenrohrs 50 befestigt sind und je eine Blattfeder 56 tragen, die sich im zugehörigen Längsschlitz 52 nach vorne erstreckt und an ihrem vorderen Ende einen keilförmigen Führungskörper 58 trägt.

Die Führungskörper 58 sind je einem der Stützkörper 36 zugeordnet. In einer hinteren, in Fig. 1 linken Endstellung des Innenrohrs 50 in bezug auf das Zwischenrohr 32 ist jeder der Führungskörper 58 im wesentlichen in den beiden zugehörigen Längsschlitzen 34 und 52 aufgenommen, sodaß er in radialer Richtung nach innen nicht über den zugehörigen Stützkörper 36 hinausragt. Wird das Innenrohr 50 aber in bezug auf das Zwischenrohr 32 nach vorne verschoben, so gleitet jeder der Führungskörper 58 auf die Keilfläche 38 des zugehörigen Stützkörpers 36 auf und wird dadurch radial nach innen verdrängt. Infolgedessen verengt sich der Zwischenraum, der zwischen zusammengehörigen Führungskörpern 58 freibleibt.

Zum axialen Verschieben des Innenrohrs 50 in bezug auf das Zwischenrohr 32 ist ein Stellglied 60 vorgesehen, das ähnlich einer Überwurfmutter gestaltet ist und ein von hinten her auf das Außengewinde 46 des Gewindeteils 40 aufgeschraubtes Innengewinde 62 aufweist. Am hinteren Ende des Stellgliedes 60 ist ein radial nach innen ragender Flansch 64 ausgebildet, der in eine Ringnut 66 im hinteren Endbereich des Innenrohrs 50 eingreift, wodurch das Stellglied 60 drehbar, aber ohne die Möglichkeit einer axialen Relativverschiebung gegenüber dem Innenrohr 50 mit diesem verbunden ist. Die Ringnut 66 kann beidseitig oder, wie dargestellt, einseitig durch einen am Innenrohr 50 befestigten Ring begrenzt sein. Zwischen dem Innengewinde 62 und dem Flansch 64 sind am Stellglied 60 achsparallele Längsschlitze 68 ausgebildet.

Das Stellglied 60 läßt sich mit einer Haltevorrichtung 70 in durch die Längsschlitze 68 vorbestimmten Drehwinkelstellungen festhalten, ohne dadurch an einer axialen Verschiebung gehindert zu sein. Die Haltevorrichtung 70 ist zangenartig gestaltet und weist ein Paar zweiarmige Hebel 72 auf, die auf je einem zur Achse der Arbeitsspindel 10 parallelen, ortsfesten Achszapfen 74 gelagert und an ihren vom Stellglied 60 entfernten Enden durch eine hydraulische oder pneumatische Kolben-Zylinder-Einheit 76 miteinander verbunden sind. Am anderen, dem Stellglied 60 benachbarten Ende jedes der beiden Hebel 72 ist ein in bezug auf das Stellglied radialer, einstellbarer Gewindebolzen 78 befestigt und eine Klaue 80 ausgebildet.

In normalem Betrieb der mit der dargestellten Spindelanordnung ausgerüsteten Drehmaschine ist die Haltevorrichtung 70 geöffnet, sodaß das Stellglied 60 zusammen mit der Arbeitsspindel 10 drehbar ist. Wenn jedoch zur Anpassung an eine Werkstoffstange 82 mit einer bestimmten Querschnittsabmessung, insbesondere mit einem bestimmten Durchmesser oder einer bestimmten Schlüsselweite, der Abstand der Führungskörper 58 von der Spindelachse A vergrößert oder verkleinert werden soll, wird die Kolben-Zylinder-Einheit 76 ausgefahren, sodaß sich die mit je einem Gewindebolzen 78 und je einer Klaue 80 ausgerüsteten Enden der Hebel 72 einander nähern, die Gewindebolzen 78 die Sperrvorrichtungen 48 aus den Längsschlitzen 68 radial nach innen verdrängen und dadurch das Stellglied 60 entriegeln und unmittelbar danach die Klauen 80 derart in die Längsschlitze 68 eingreifen, daß das Stellglied gegen Drehen festgehalten wird.

Anschließend wird die Arbeitsspindel 10 in einer durch die C-Achsensteuerung gesteuerten Weise derart gedreht, daß der von dem Gewindeteil 40 mit seinem Außengewinde 46 und dem Stellglied 60 mit seinem Innengewinde 62 gebildete Gewindetrieb eine Verstellung des Innenrohrs 50 nach vorne oder hinten hervorruft, durch welche die Führungskörper 58 durch weiteres Aufgleiten auf die Keilflächen 38 der Stützkörper 36
bzw. durch Abgleiten von diesen Keilflächen auf ihren gewünschten neuen Abstand von der Spindelachse A eingestellt
werden.

Die neue Einstellung kann, ausgehend von der bisherigen
Einstellung der Führungskörper 58, entweder auf direktem Weg
erreicht werden oder - vorzugsweise - dadurch, daß das Stellglied 60 und mit ihm das Innenrohr 50 zunächst in eine definierte Bezugsstellung und erst danach in die neue Betriebsstellung gebracht wird.

Die Bezugsstellung ist im dargestellten Beispiel dadurch definiert, daß das Stellglied 60 eine Markierung, beispielsweise
in Gestalt eines an ihm befestigten Magneten, aufweist, der
ein berührungsloser Endschalter 84 zugeordnet ist.

Traub AG
EP-60 981

<u>P a t e n t a n s p r ü c h e</u>

1.  Verfahren zum automatischen Verstellen einer Stangenführung an einer numerisch gesteuerten stangenverarbeitenden
Drehmaschine mit

- einer hohlen Arbeitsspindel (10),

- Führungskörpern (58) zum Führen einer Werkstoffstange (82)
im Inneren der Arbeitsspindel (10),

- Stützkörpern (36), an denen sich die Führungskörper (58)
abstützen,

- einem Innenrohr (50), das sich in die Arbeitsspindel (10)
erstreckt, mit dieser zu gemeinsamer Drehung verbunden, jedoch
axial verstellbar ist, um eine axiale Relativbewegung von Führungskörpern (58) und Stützkörpern (36) in Bezug zueinander zu
bewirken und dadurch die Stellung der Führungskörper (58) in
radialer Richtung an eine Querschnittsabmessung der Werkstoffstange (82) anzupassen, und

- einem Stellglied (60), das im normalen Betrieb der Drehmaschine ebenfalls gemeinsam mit der Arbeitsspindel (10) drehbar
ist und zum axialen Verstellen des Innenrohrs (50) eine Relativbewegung gegenüber der Arbeitsspindel (10) auszuführen
vermag,

dadurch g e k e n n z e i c h n e t , daß eine gesteuerte
Drehung der Arbeitsspindel (10) in eine der Drehung proportionale Axialverstellung des Stellgliedes (60) umgesetzt wird,
während das Stellglied (60) gegen Drehen festgehalten wird.

2.   Verfahren nach Anspruch 1,
dadurch g e k e n n z e i c h n e t , daß jeweils vor dem
Einführen einer Werkstoffstange (82) mit veränderter Querschnittsbmessung die Arbeitsspindel (10) in eine vorbestimmte
Winkelstellung gedreht wird, während das Stellglied (60) in
einer ebenfalls vorbestimmten Winkelstellung festgehalten
wird.

3.   Verfahren nach Anspruch 2,
dadurch g e k e n n z e i c h n e t , daß die vorbestimmte
Winkelstellung der Arbeitsspindel (10) diejenige ist, bei der
die Führungskörper (58) auf den größtmöglichen Werkstoffstangendurchmesser eingestellt sind.

4.   Numerisch gesteuerte, stangenverarbeitende Drehmaschine,
mit
- einer hohlen Arbeitsspindel (10),
- Führungskörpern (58) zum Führen einer Werkstoffstange (82)
im Inneren der Arbeitsspindel (10),
- Stützkörpern (36), an denen sich die Führungskörper (58)
abstützen,
- einem Innenrohr (50), das sich in die Arbeitsspindel (10)
erstreckt, mit dieser zu gemeinsamer Drehung verbunden, jedoch
axial verstellbar ist, um eine axiale Relativbewegung von Führungskörpern (58)  und Stützkörpern (36) in bezug zueinander
zu bewirken und dadurch die Stellung der Führungskörper (58)
in radialer Richtung an eine Querschnittsabmessung der Werkstoffstange (82) anzupassen, und
- einem Stellglied (60), das im normalen Betrieb der Drehmaschine ebenfalls gemeinsam mit der Arbeitsspindel (10) drehbar
ist und zum axialen Verstellen des Innenrohrs (50) eine Relativbewegung gegenüber der Arbeitsspindel (10) auszuführen vermag,
dadurch g e k e n n z e i c h n e t , daß
- der Arbeitsspindel (10) in ansich bekannter Weise eine Drehwinkelsteuerung (C-Achsensteuerung) zugeordnet ist,
- das Stellglied (60) als Bestandteil eines Gewindetriebs zwischen Arbeitsspindel (10) und Innenrohr (50) mit einem dieser
beiden Bauteile durch eine Gewindepaarung (46, 62) verbunden
und mit dem anderen dieser Bauteile relativdrehbar, jedoch
zu gemeinsamer Axialverschiebung verbunden ist, und
- dem Stellglied (60) eine gesteuerte Haltevorrichtung (70)
zugeordnet ist, mit der sich das Stellglied (60) in mindestens
einer definierten Drehwinkelstellung festhalten läßt.


5.   Drehmaschine nach Anspruch 4,
dadurch  g e k e n n z e i c h n e t , daß das Stellglied (60)
in der Art einer Überwurfmutter am Innenrohr (50) gelagert und
mit einem Gewindeteil (40) verschraubt ist, das mit der Arbeitsspindel (10) fest verbunden ist.


6.   Drehmaschine nach Anspruch 5,
dadurch  g e k e n n z e i c h n e t , daß das Gewindeteil
(40) als Verlängerung eines Zwischenrohrs (32) ausgebildet
ist, welches das Innenrohr (50) mit Schiebesitz umschließt.


7.   Drehmaschine nach Anspruch 6,
dadurch  g e k e n n z e i c h n e t , daß das Zwischenrohr
(32) und das Innenrohr (50)  innerhalb der Arbeitsspindel (10)
Längsschlitze (34 bzw. 52) aufweisen, die einander mindestens
teilweise überdecken und je einen Teil eines Führungskörpers
(58) sowie eines Stützkörpers (36) enthalten.


8.   Drehmaschine nach einem der Ansprüche 4 bis 7,
dadurch  g e k e n n z e i c h n e t ,  daß die gesteuerte
Haltevorrichtung (70) das Stellglied (60) zangenartig umgreift.


9.   Drehmaschine nach Anspruch 8,
dadurch  g e k e n n z e i c h n e t ,  daß das Stellglied
(60) mit zwei einander diametral gegenüberliegenden Längsschlitzen (68) versehen ist und die Haltevorrichtung (70) zwei
zum Eingreifen in diese Längsschlitze (68) ausgebildete Klauen
(80) aufweist.

10.    Drehmaschine nach einem der Ansprüche 4 bis 9, dadurch g e k e n n z e i c h n e t , daß das Stellglied (60) im normalen Betrieb durch mindestens eine Sperrvorrichtung (48) an einer Relativdrehung gegenüber der Arbeitsspindel (10) gehindert ist und diese Sperrvorrichtung (48) durch die Haltevorrichtung (70) entriegelbar ist.

5683

FIG.1

FIG.2

FIG.3

1/3

0231911

FIG.4

FIG.5